Europäisches Patentamt

European Patent Office

Office européen des brevets

(11) Numéro de publication: **0 333 961**
**A1**

## (12) DEMANDE DE BREVET EUROPEEN

(21) Numéro de dépôt: **88400739.4**

(22) Date de dépôt: **25.03.88**

(51) Int. Cl.⁴: **F16J 15/32 , F04B 39/04**

(43) Date de publication de la demande:
**27.09.89 Bulletin 89/39**

(84) Etats contractants désignés:
**BE DE ES GB IT NL SE**

(71) Demandeur: **ABG SEMCA S.A.**
**408, avenue des Etats-Unis**
**F-31016 Toulouse Cédex(FR)**

(72) Inventeur: **Cremont, Henri**
**THOMSON-CSF SCPI 19, avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

(54) **Segment d'étanchéité de piston.**

(57) L'invention concerne un segment d'étanchéité de piston pour assurer l'étanchéité de la chambre de compression d'un compresseur.

Le segment d'étanchéité comprend un joint annulaire (31) se prolongeant vers l'intérieur de l'anneau par une lèvre (35) sensiblement verticale et une virole (32) présentant une lèvre (39) inclinée vers l'intérieur de l'anneau et fendue, la virole (32) s'emboîtant sur la joint annulaire (31) de manière que la lèvre (39) de la virole s'applique sur la lèvre (35) du joint.

L'invention est applicable aux compresseurs haute pression.

FIG_2

## SEGMENT D'ETANCHEITE DE PISTON

L'invention concerne un segment d'étanchéité de piston, notamment pour assurer l'étanchéité de la chambre de compression d'un compresseur haute pression par rapport au fluide gazeux à comprimer.

Les compresseurs permettent de comprimer un fluide gazeux pour l'amener à une pression déterminée, variable selon l'usage qui doit être fait de ce fluide comprimé. C'est ainsi que lorsqu'un compresseur est utilisé dans des installations frigorifiques pour obtenir, par compression, des températures très basses, la pression à atteindre peut être de plusieurs dizaines à quelques centaines de bars.

L'obtention de ces pressions très élevées implique une construction soignée des compresseurs ; ces derniers consistent essentiellement en une chambre dite de compression sous la forme d'un cylindre dans lequel coulisse un piston animé d'un mouvement de va-et-vient par un système de bielle-vilebrequin actionné par un moteur. La chambre de compression comporte un clapet d'admission du fluide gazeux à une certaine pression et un clapet de refoulement à la pression requise.

Comme ces éléments : cylindre, piston, bielle et vilebrequin sont liés entre eux et se déplacent les uns par rapport aux autres, les frottements sont importants et il est nécessaire de prévoir une lubrification de ces différents éléments. Cette lubrification est en général obtenue par une circulation naturelle ou plus ou moins forcée d'une huile contenue dans un carter englobant le vilebrequin : c'est le système dit à barbotage d'huile.

Dans un compresseur de ce type, il faut éviter, d'une part, que l'huile de lubrification pénètre dans la chambre de compression pour polluer le fluide gazeux et, d'autre part, que le fluide gazeux à comprimer ne s'échappe de la chambre de compression par un orifice autre que celui garni du clapet de refoulement car il serait difficile d'atteindre la pression requise.

A cet effet, on utilise souvent au moins un segment d'étanchéité plus spécialement destiné à assurer l'étanchéité vis-à-vis de l'huile de lubrification et au moins un segment d'étanchéité plus spécialement destiné à assurer l'étanchéité vis-à-vis du fluide gazeux à comprimer.

Un segment d'étanchéité du type classique consiste en un joint circulaire qui présente une base annulaire surmontée d'une lèvre dont le diamètre interne est plus petit que le diamètre interne de la base.

La base circulaire est maintenue en place dans le corps du cylindre tandis que la lèvre vient s'appuyer sur la périphérie du piston de manière à assurer l'étanchéité. Le joint est par exemple réalisé en polytétrafluoréthylène chargé en céramique pour résister aux hautes températures et résister à l'usure.

Un tel segment d'étanchéité est satisfaisant lorsque les pressions à obtenir ne sont pas trop élevées mais ne convient pas lorsque les pressions dans la chambre de compression atteignent plusieurs centaines de bar car la lèvre du joint circulaire n'est pas appliquée avec une force suffisante sur la périphérie du piston. En outre, par suite du mouvement de va-et-vient du piston, les bords de la lèvre ont tendance à fluer, ce qui détruit le joint et nuit à son efficacité.

Un but de la présente invention est donc de réaliser un segment d'étanchéité qui assure une étanchéité d'une chambre de compression sous une pression de plusieurs centaines de bars.

Un autre but de la présente invention est de réaliser un segment d'étanchéité dans lequel la partie en contact avec le piston est appliquée fortement contre le piston pour assurer une meilleure étanchéité.

Un segment d'étanchéité pour un piston animé d'un mouvement de va-et-vient dans un cylindre est, selon l'invention, caractérisé en ce qu'il comprend un joint annulaire coopérant avec une bague métallique de maintien ou virole, appliquant ce joint contre le piston ; cette bague présente une couronne avec des fentes permettant une élasticité en direction radiale pour exercer la force d'application de la bague contre le joint.

Une telle bague est de réalisation particulièrement simple et assure une pression uniforme sur le joint et donc une bonne étanchéité.

Les segments circulaires de la bague se terminent par un retour, dirigé vers le piston qui a pour but d'empêcher le fluage du joint parallèlement à l'axe du piston. Ce joint est par exemple en polytétrafluoréthylène chargé en céramique.

D'autres caractéristiques et avantages d'un segment d'étanchéité réalisé selon la présente invention apparaîtront avec la description qui suit d'un exemple de réalisation donné ci-après en référence aux dessins annexés dans lesquels :

- La figure 1 est une vue en coupe d'une partie d'un compresseur qui utilise deux segments d'étanchéité selon la présente invention ;

- La figure 2 est une vue en coupe à plus grande échelle de la partie A de la figure 1 qui montre l'agencement des différents éléments du segment d'étanchéité selon la présente invention ;

- La figure 3 est une vue en coupe du joint annulaire 31 des figures 1 et 2 ;

- La figure 4 est une vue de dessus de la bague de serrage ou virole 32 des figures 1 et 2 selon la présente invention et,

- La figure 5 est une vue en coupe de la bague de serrage ou virole 32 selon l'axe V-V de la figure 4.

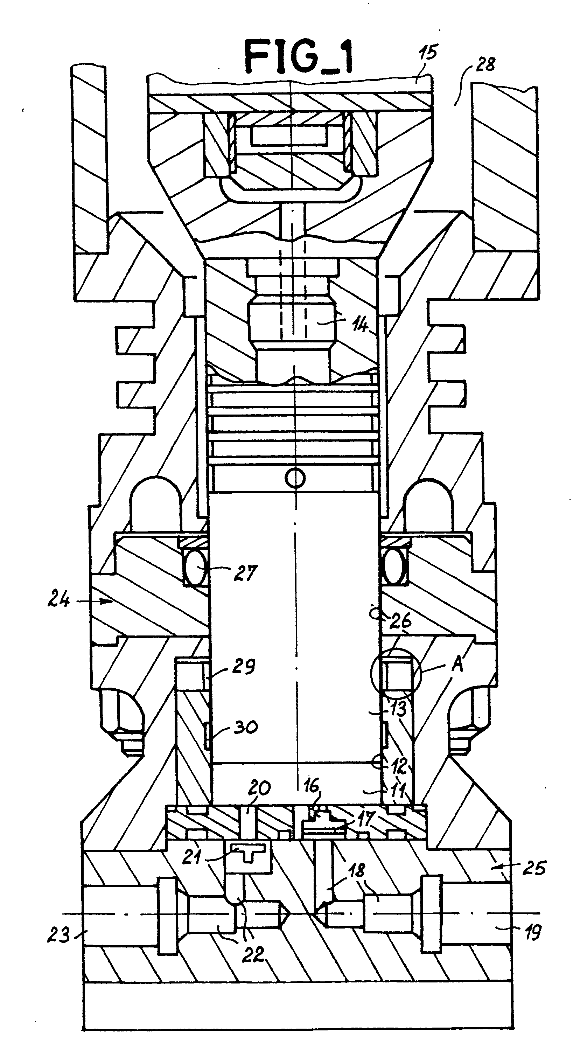

Sur la figure 1, on n'a représenté et on ne décrira que les éléments d'un compresseur dont la description est nécessaire à la compréhension de l'invention relative à un segment d'étanchéité.

Ce compresseur comprend une chambre de compression 11 délimitée par un cylindre à section circulaire 12 dans lequel coulisse un piston lisse 13 animé d'un mouvement alternatif de va-et-vient par l'intermédiaire d'un embiellage 14 relié à un vilebrequin 15 actionné par un moteur non représenté. L'embiellage 14 et le vilebrequin 15 baignent dans de l'huile de lubrification contenue dans un carter 28. La chambre de compression 11 comporte un orifice d'entrée 16 du fluide gazeux à comprimer muni d'un clapet d'admission 17 et connecté, par des conduits 18, à une prise extérieure 19 de fluide gazeux. Cette chambre comporte également un orifice de sortie 20 du fluide gazeux comprimé, muni d'un clapet de refoulement 21 et connecté, par des conduits 22, à une prise extérieure de sortie 23 du fluide gazeux comprimé.

Les différents éléments qui constituent le corps 24 et la tête 25 du cylindre 12 sont de construction classique et ne seront pas décrits de manière plus détaillée sauf en ce qui concerne les différents moyens d'étanchéité portés par la face interne 26 du cylindre 12.

Dans la partie du cylindre du côté de l'embiellage du piston 13, le cylindre comporte un segment d'étanchéité 27 qui a pour but d'assurer l'étanchéité à l'huile de lubrification du vilebrequin et de l'embiellage entre le carter 28 et la chambre de compression 11, huile qui aurait tendance à rejoindre la chambre de compression à travers l'espace annulaire entre le piston 13 et la face interne 26 du cylindre.

Dans la partie du cylindre du côté de la tête 25, le cylindre comporte deux segments d'étanchéité identiques 29 et 30 selon la présente invention qui ont pour but d'assurer l'étanchéité de l'espace annulaire entre le piston lisse 13 et la paroi interne 26 du cylindre 12 d'une part, au fluide gazeux à haute pression contenu dans la chambre de compression 11 et d'autre part, à l'huile de lubrification du carter 28, qui aurait pu fuir à travers le segment d'étanchéité 27.

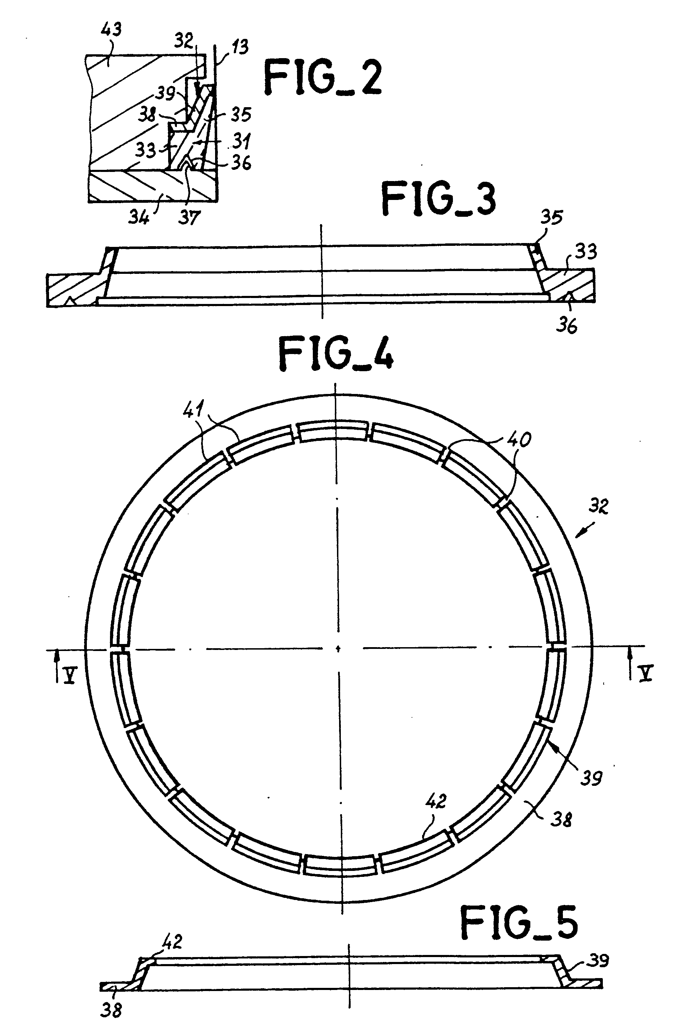

Les segments d'étanchéité 29 et 39 seront maintenant décrits de manière détaillée en relation avec les figures 2 à 5. Ainsi sur la figure 2, qui est une vue détaillée de la partie A du segment 29 de la figure 1, le segment comprend un joint annulaire 31 et une bague de maintien ou virole 32 maintenue par un serre-joint 43 faisant partie du corps du cylindre 24. Le joint annulaire 31 comporte une base annulaire 33 horizontale d'une certaine épaisseur qui repose sur une embase 34 faisant partie du corps de cylindre 24 et une lèvre 35, sensiblement verticale, qui prolonge la base vers le haut et vers l'extérieur de l'anneau. C'est cette lèvre 35 qui est en contact avec la périphérie du piston 13.

La partie de la base 33 en contact avec l'embase 34, que l'on appellera face inférieure, présente une gorge circulaire 36 qui coopère avec une saillie circulaire 37 de l'embase 34. Comme le montre la figure 3, le diamètre intérieur du joint 31 diminue de la base vers le sommet de la lèvre.

Comme le montrent les figures 4 et 5, la virole 32 comporte une base annulaire 38 qui se prolonge vers l'intérieur de l'anneau et vers le haut par une lèvre 39. Cette lèvre 39 présente des fentes équidistantes 40, par exemple au nombre de dix-huit, qui délimitent des segments circulaires circulaires 41. L'extrémité de chaque segment circulaire 41 se termine par un retour 42, sensiblement horizontal, qui a pour but d'empêcher le fluage de la lèvre 35 du joint 31. Les fentes 40 ont pour but de donner de l'élasticité à la lèvre 39. La virole 32 s'emboîte sur le dessus du joint 31 de manière que les segments circulaires viennent s'appliquer sur la lèvre 35 du joint tandis que la base 38 de la virole s'applique sur la face supérieure de la base 33.

L'ensemble joint-virole est maintenu en place sur l'embase 34 par la saillie circulaire 37 de l'embase 34 qui coopère avec la gorge 36 et par le serre-joint 43 qui fait partie du corps du cylindre 24 et qui présente des épaulements en contact avec la périphérie du joint circulaire et avec les bases annulaires 33 et 38 du joint et de la virole. Bien entendu, des moyens sont prévus pour réaliser le serrage du serre-joint 43 sur l'embase 34, le joint annulaire 31 et la virole 32.

Le joint annulaire 31 est de préférence réalisé en polytétrafluoréthylène chargé en céramique tandis que la virole 32 est de préférence réalisée en métal ou un alliage métallique.

La virole 32 avec ses segments ou dents 41 assure une serrage uniforme et donc une bonne étanchéité. On a constaté que cette virole était satisfaisante pour un compresseur d'air à 400 bars environ et à faible débit.

L'invention a été décrite en relation avec un exemple particulier de réalisation et dans son application à un compresseur. Bien entendu, elle peut présenter diverses variantes et peut avoir des applications autres que le compresseur sans sortir du cadre de la présente invention.

## Revendications

1. Segment d'étanchéité pour un piston (13) animé d'un mouvement de va-et-vient dans un cylindre (12) comprenant un joint annulaire (33) coopérant avec une bague métallique de maintien ou virole (32), appliquant ce joint contre le piston, cette bague (32) présentant une couronne (39) avec des fentes (40) équidistantes délimitant des segments circulaires (41) et permettant une élasticité en direction radiale pour exercer la force d'application de la bague contre le joint, caractérisé en ce que chaque segment circulaire (41) se termine par un retour (42) empêchant le fluage du joint.

2. Segment d'étanchéité selon la revendication 1, caractérisé en ce que le joint annulaire comporte une base annulaire (33) sensiblement perpendiculaire à l'axe du piston qui se prolonge vers l'intérieur par une lèvre (35) destinée à être appliquée contre la surface du piston, la bague (32) présentant une base annulaire s'appliquant contre la base du joint, la couronne (39) s'appliquant contre la face externe de la lèvre du joint.

3. Segment selon la revendication 2, caractérisé en ce que la base (33) du joint annulaire présente une gorge ou une saillie (36) coopérant avec une saillie ou gorge (37) portée par une embase (34) du corps de cylindre.

4. Segment d'étanchéité selon la revendication 3, caractérisé en ce que l'embase (34) constitue un élément d'un serre-joint pour appliquer la base du joint contre la base de la bague.

5. Segment d'étanchéité selon l'une quelconque des revendications précédentes, caractérisé en ce que le joint annulaire (31) est en polytétrafluoréthylène chargé en céramique.

6. Segment d'étanchéité selon la revendication 2, caractérisé en ce que la base (38) et la lèvre (39) de la virole (32) viennent s'appliquer respectivement sur la base (33) et la lèvre (35) du joint annulaire (31).

# FIG_1

FIG_2

FIG_3

FIG_4

FIG_5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 611 020 (ABG SEMCA) <br> * En entier * <br> --- | 1-6 | F 16 J 15/32 <br> F 04 B 39/04 |
| A | FR-A- 770 290 (C. FREUDENBERG) <br> * Figures 5,6,8; page 2, lignes 70-90; résumé * <br> --- | 1-4,6 | |
| A | GB-A-2 167 140 (T.P. NICHOLSON) <br> * Figure 2; résumé * <br> --- | 1 | |
| A | US-A-2 342 458 (W. DAVIES) <br> * Figures 1,3,5; page 1, colonne de gauche, lignes 1-14 * <br> --- | 1,2,4 | |
| A | FR-A-1 438 119 (HUGHES AIRCRAFT CO.) <br> * Figures; page 1, colonne de gauche, lignes 1-3; résumé * <br> --- | 1,2,4,6 | |
| A | FR-A-2 545 545 (SOCIETE CHIMIQUE DES CHARBONNAGES) <br> * Revendications 1,2 * <br> ----- | 1,5 | |

|  | **DOMAINES TECHNIQUES RECHERCHES (Int. Cl.4)** |
|---|---|
|  | F 16 J <br> F 04 B |

Le présent rapport a été établi pour toutes les revendications

| Lieu de la recherche | Date d'achèvement de la recherche | Examinateur |
|---|---|---|
| LA HAYE | 12-10-1988 | NARMINIO A. |

EPO FORM 1503 03.82 (P0402)